# EUROPÄISCHE PATENTANMELDUNG

(11) **EP 3 650 819 A1**
(43) Veröffentlichungstag der Anmeldung: **13.05.2020**
(21) Anmeldenummer: 19203968.3
(22) Anmeldetag: 18.10.2019
(51) Int. Cl.: G01G 19/08

(54) **BESTIMMUNG EINER ACHSLAST EINES SATTELAUFLIEGERS**

(30) Priorität: 12.11.2018 DE 102018128233
(71) Anmelder: WABCO GmbH, 30453 Hannover (DE)
(72) Erfinder: FILTER, Stefan, 30419 Hannover (DE); LUCAS, Johann, 31319 Sehnde (DE); THIMM, Andreas, 31157 Sarstedt (DE)
(74) Vertreter: Schwarzweller, Thomas

(57) **Zusammenfassung**

Gezeigt werden ein Verfahren und ein System, die es ermöglichen, eine Achslast eines Sattelaufliegers eines Sattelschlepper-Sattelauflieger-Gespanns auf Basis von während des Fahrens gemessenen Fahrdynamikparametern und einer Belastung einer Hinterachse des Sattelschleppers zu bestimmen.

## Beschreibung

### Technisches Gebiet

Die vorliegende Erfindung bezieht sich auf die Bestimmung einer Achslast eines Sattelaufliegers. Insbesondere bezieht sich die vorliegende Erfindung auf ein Verfahren und ein System zum Bestimmen einer Achslast eines Sattelaufliegers während des Fahrens, ohne dass dezidierte Wiegestationen benötigt werden.

### Hintergrund

Das Gewicht eines Sattelaufliegers kann zur Überprüfung an einer Wiegestation gemessen werden. Zum Beispiel kann das Sattelschlepper-Sattelauflieger-Gespann, um das Gesamtgewicht pro Achse zu ermitteln, auf einer Lastwagenwaage platziert bzw. über eine Lastwagenwaage gefahren werden.

### Darstellung der Erfindung

Die vorliegende Erfindung stellt ein Verfahren und ein System bereit, die es ermöglichen, eine Achslast eines Sattelaufliegers eines Sattelschlepper-Sattelauflieger-Gespanns auf Basis von während des Fahrens gemessenen Fahrdynamikparametern und einer Belastung einer Hinterachse des Sattelschleppers zu bestimmen.

Das Verfahren umfasst ein Bestimmen einer Masse des Sattelschlepper-Sattelauflieger-Gespanns auf Basis von während der Fahrt gemessenen Fahrdynamikparametern, ein Messen einer Belastung einer Hinterachse des Sattelschleppers, ein Berechnen einer Belastung eines Königzapfens des Sattelschleppers auf Basis der gemessenen Belastung und ein Berechnen einer Achslast des Sattelaufliegers auf Basis der bestimmten Masse, einer Masse des Sattelschleppers und der Belastung des Königzapfens.

In diesem Zusammenhang ist unter dem Begriff "Sattelschlepper-Sattelauflieger-Gespann", wie er in der Beschreibung verwendet wird, insbesondere ein Zugfahrzeug (Sattelschlepper) und ein gezogenes Fahrzeug (Sattelauflieger) zu verstehen. Ferner bezieht sich der Begriff "Fahrdynamikparameter", wie er in der Beschreibung und den Ansprüchen verwendet wird, insbesondere auf Parameter, welche die Kräfte beschreiben, die während des Fahrens auf das Sattelschlepper-Sattelauflieger-Gespann wirken, wie zum Beispiel die Antriebskraft (die vom Motordrehmoment abhängt), der Luftwiderstand, der Rollwiderstand, die dynamische Kraft, die Rotationskraft und/oder die aus der Fahrbahnneigung resultierende Kraft. Ferner bezieht sich der Begriff "Hinterachse", wie er in der Beschreibung und den Ansprüchen verwendet wird, insbesondere auf eine Achse, die im Bereich der hinteren Hälfte des Sattelschleppers angebracht ist.

Ferner kann sich der Begriff "Belastung/Last", wie er in der Beschreibung und den Ansprüchen verwendet wird, sowohl auf einen Massewert als auch auf einen Gewichtswert beziehen, da (im Rahmen der vorliegenden Offenbarung) Unterschiede in der Stärke des Gravitationsfeldes vernachlässigbar sein können. In diesem Zusammenhang bezieht sich der Begriff "Belastung", wie er in der Beschreibung und den Ansprüchen verwendet wird, insbesondere auf eine Masse oder ein Gewicht, welches die auf die Komponente wirkende Gravitationskraft bewirkt bzw. zu der auf die Komponente wirkenden Gravitationskraft korrespondiert.

Des Weiteren bezieht sich der Begriff "Beladung", wie er in der Beschreibung verwendet wird, insbesondere auf die Masse oder das Gewicht der Ladung des Sattelaufliegers. Dabei versteht es sich, dass sobald die Achslast bestimmt ist, die Beladung pro Achse berechnet werden kann, indem, zum Beispiel, die Achslast des leeren Sattelaufliegers berücksichtigt wird.

Ferner versteht es sich, dass die Formulierung "auf Basis von"/"basierend auf", wie sie in der Beschreibung und den Ansprüchen verwendet wird, nicht ausschließt, dass andere Parameter (oder Schritte) als die explizit erwähnten berücksichtigt (oder eingesetzt) werden.

Da das Verfahren keine Wiegestation mit einer LKW-Waage benötigt, ist es nicht nötig, die entsprechende Infrastruktur zu errichten und zu unterhalten.

Das Bestimmen der Masse des Sattelaufliegers und des Sattelschleppers, der den Sattelauflieger zieht, auf Basis von während der Fahrt gemessenen Fahrdynamikparametern kann ein Berechnen der Masse des Sattelaufliegers und des Sattelschleppers, der den Sattelauflieger zieht, auf Basis einer Geschwindigkeit und einer Beschleunigung des Sattelschleppers und des Sattelaufliegers umfassen.

Das Messen der Belastung der Hinterachse des Sattelschleppers kann ein Messen der Belastung der Hinterachse des Sattelschleppers basierend auf einem Luftdruck eines Luftfederungssystems des Sattelschleppers umfassen.

Das Berechnen der Belastung des Königzapfens des Sattelschleppers kann ferner auf einer Länge eines Hebelarms von einer Vorderachse zum Königszapfen und einer Länge eines Hebelarms von der Hinterachse zum Königszapfen basieren.

Das Berechnen der Achslast des Sattelaufliegers auf Basis der bestimmten Masse, der Masse des Sattelschleppers und der Belastung des Königzapfens kann auf einem Abziehen der Masse des Sattelschleppers und der Belastung des Königzapfens von der bestimmten Masse und einem Teilen des Ergebnisses durch die Anzahl an Achsen basieren.

Die Achslast kann einem Luftfederungssystem des Sattelaufliegers bereitgestellt werden.

Zum Beispiel kann das Luftfederungssystem auf Basis der Masse/des Gewichts des Sattelaufliegers angepasst werden. Ferner kann auch das Bremssystem des Sattelaufliegers auf Basis der Masse/des Gewichts angepasst werden.

Wenn die Achslast über einer oberen Grenze liegt, kann ein Alarm erzeugt werden. Zum Beispiel kann dem Fahrer im Falle einer Überladung ein visueller und/oder akustischer Alarm präsentiert werden.

Die Achslast kann per Funk zu einem Empfänger übertragen werden.

Der Empfänger kann die Achslast nutzen um zu überwachen, ob eine vorgesehene Menge an Gütern vom Sattelschlepper geladen/transportiert/entladen sind/wurden und entsprechend reagiert werden. Zum Beispiel könnte ein Lastwagenfahrer informiert werden, dass die bestimmte Achslast anzeigt, dass Güter fehlen, was auf einen nicht vollständigen oder fehlerhaften Beladungsprozess zurückzuführen sein kann, oder dass Güter vorhanden zu sein scheinen, die wahrscheinlich nicht zur vorgesehenen Fracht gehören.

Ferner könnte das ladungsbasierte Abrechnen vereinfacht werden. Zum Beispiel kann gegenüber dem Unternehmen, welches das Sattelschlepper-Sattelauflieger-Gespann betreibt, die Straßen-/Brückenbenutzung achslastbasiert abgerechnet werden oder das Unternehmen kann gegenüber seinen Kunden beladungsbasiert abrechnen.

Die Achslast kann einer Wiegestation oder einem Computersystem einer Behörde bereitgestellt werden.

Zum Beispiel können Behörden wie Polizei, Zoll, oder Mauteintreiber die bereitgestellte Information dazu nutzen die Fracht zu überprüfen oder gegenüber dem Unternehmen, welches das Sattelschlepper-Sattelauflieger-Gespann betreibt, abzurechnen.

Das System umfasst eine Vielzahl an Sensoren, eingerichtet zum Messen von Fahrdynamikparametern beim Fahren und einer Belastung einer Hinterachse eines Sattelschleppers. Das System umfasst ein Rechengerät, eingerichtet zum Bestimmen einer Masse des Sattelschleppers, der einen Sattelauflieger zieht, und des Sattelaufliegers auf Basis der gemessenen Fahrdynamikparameter, Berechnen einer Belastung eines Königzapfens des Sattelschleppers auf Basis der gemessenen Belastung und Berechnen einer Achslast des Sattelaufliegers auf Basis der bestimmten Masse, einer Masse des Sattelschleppers und der Belastung des Königzapfens.

In diesem Zusammenhang bezieht sich der Begriff "Rechengerät", wie er in der Beschreibung und den Ansprüchen verwendet wird, insbesondere auf einen Mikrocontroller; er kann sich jedoch auch auf irgendeine andere Hardware beziehen, die einen Prozessor aufweist und Anweisungen speichert, die, wenn sie ausgeführt werden, besagte Berechnungen durchführen.

Das Rechengerät kann eingerichtet sein, die Masse des Sattelaufliegers und des Sattelschleppers, der den Sattelauflieger zieht, auf Basis einer Geschwindigkeit und einer Beschleunigung des Sattelschleppers und des Sattelaufliegers zu berechnen.

Das Rechengerät kann eingerichtet sein, die Belastung der Hinterachse des Sattelschleppers basierend auf einem Luftdruck eines Luftfederungssystems des Sattelschleppers zu messen.

Das Rechengerät kann eingerichtet sein, die Belastung des Königzapfens des Sattelschleppers basierend auf einer Länge eines Hebelarms von einer Vorderachse zum Königszapfen und einer Länge eines Hebelarms von der Hinterachse zum Königszapfen zu bestimmen.

Das Rechengerät kann eingerichtet sein, die Masse des Sattelschleppers und die Belastung des Königzapfens von der bestimmten Masse abzuziehen und das Ergebnis durch die Anzahl an Achsen zu teilen.

Der Rechner kann eingerichtet sein, die Achslast einem Luftfederungssystem des Sattelaufliegers bereitzustellen.

Dabei versteht es sich, dass die Merkmale und die damit verknüpften Vorteile des offenbarten Verfahrens durch das offenbarte System realisiert werden können (und umgekehrt).

### Kurze Beschreibung der Zeichnungen

Die obigen Aspekte und viele der damit verknüpften Vorteile werden in dem Maße deutlicher und zugänglicher in dem sie unter Bezugnahme auf die folgende detaillierte Beschreibung unter Hinzunahme der beigefügten Zeichnungen, in denen sich gleiche Bezugszeichen in den unterschiedlichen Ansichten auf gleiche Elemente beziehen, verständlicher werden.
Fig. 1 illustriert Kräfte, die auf Komponenten eines Sattelschlepper-Sattelauflieger-Gespanns einwirken;
Fig. 2 zeigt ein Flussdiagramm eines beispielhaften Verfahrens zum Bestimmen einer Achslast eines Sattelaufliegers eines Sattelschlepper-Sattelauflieger-Gespanns;

Dabei versteht es sich, dass die Zeichnungen lediglich dazu gedacht sind, die hierin beschriebenen Strukturen und Prozeduren zu illustrieren.

### Wege zur Ausführung der Erfindung

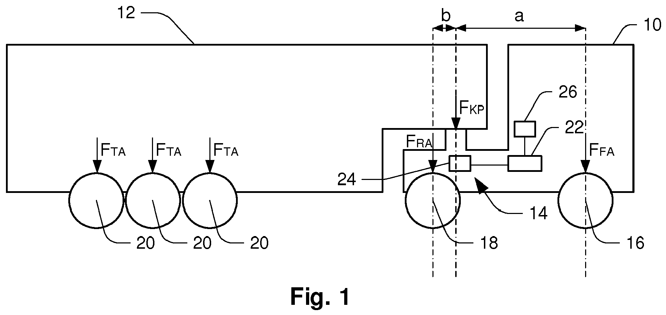

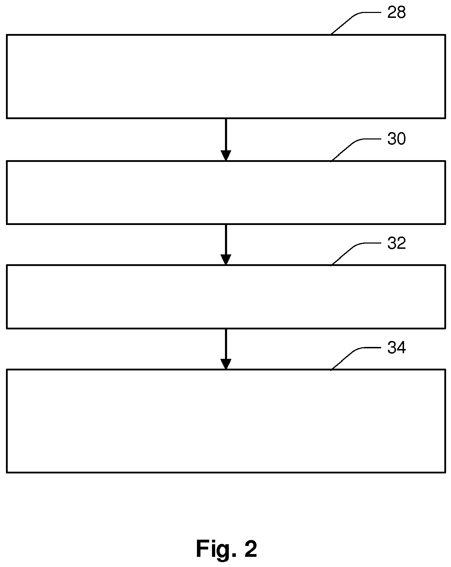

Fig. 1 zeigt einen Sattelschlepper 10, der einen am Königszapfen 14 des Sattelschleppers 10 befestigten Sattelauflieger 12 zieht. Der Sattelschlepper 10 hat eine Vorderachse 16 und eine Hinterachse 18, die vom Königszapfen 14 in Längsrichtung beabstandet sind. Der Sattelauflieger 12 hat eine Vielzahl an Achsen 20, die relativ nah beieinander liegen, so dass die Belastung FTA pro Achse 20 im Wesentlichen gleich ist (z.B. +/- 5%). Der Sattelschlepper 10 umfasst ein System mit einem Sensor 22, der die Belastung der Hinterachse 18 des Sattelschleppers 10 misst, und einem oder mehreren weiteren Sensoren 24 zum Messen von Fahrdynamikparametern beim Fahren. Die Sensoren 22, 24 sind mit einem Rechengerät 26 verbunden, das eingerichtet ist, die in Fig. 2 gezeigten Schritte auszuführen.

In Schritt 28 bestimmt das Rechengerät 26 die Masse des Sattelschleppers 10 und des Sattelaufliegers 12 auf Basis der gemessenen Fahrdynamikparameter. Zum Beispiel bezieht das Rechengerät 26 die Antriebskraft F_{Driving}, den Luftwiderstand F_{Air}, den Rollwiderstand F_{Roll}, die dynamische Kraft F_{Dyn}, die Rotationskraft F_{Rot} und die aus der Fahrbahnneigung resultierende Kraft F_{Gr} aus einem oder mehreren Sensoren 24 und löst die Gleichung F_{Driving} = F_{Air} + F_{Roll} + F_{Dyn} + F_{Rot} + F_{Gr} nach der Masse des Sattelschlepper-Sattelauflieger-Gespanns auf.

In den Schritten 30 und 32 bezieht das Rechengerät 26 die Belastung FRA der Hinterachse 18 des Sattelschleppers 10 vom Sensor 22 und berechnet die Belastung FKP des Königzapfens 14 des Sattelschleppers 10 auf Basis der gemessenen Belastung FRA. Zum Beispiel kann die Belastung FKP des Königzapfens 14 als FKP=(a+b)/a*(FRA-FRA_{,solo}) berechnet werden (wobei FRA_{,solo} die Belastung der Hinterachse 18 des Sattelschleppers 10 ohne Sattelauflieger 12 angibt). Ferner kann die Belastung FFA der Vorderachse 16 als FFA=b/(a+b)*FKP+ FFA_{,solo} berechnet werden (wobei FFA_{,solo} die Belastung der Frontachse 16 des Sattelschleppers 10 ohne Sattelauflieger 12 angibt).

In Schritt 34 berechnet das Rechengerät 26 die Achslast des Sattelaufliegers 12 auf Basis der bestimmten Masse (des Sattelschleppers 10 und des Sattelaufliegers 12), der Masse des Sattelschleppers 10 und der Belastung FKP des Königzapfens 14, durch Abziehen der Masse des Sattelschleppers 10 und der Belastung FKP des Königzapfens 14 von der bestimmten Masse (des Sattelschleppers 10 und des Sattelaufliegers 12) und Teilen des Ergebnisses durch die Anzahl an Achsen 20 des Sattelaufliegers 12.

### Bezugszeichenliste

- 10: Sattelschlepper
- 12: Sattelauflieger
- 14: Königszapfen
- 16: Vorderachse
- 18: Hinterachse
- 20: Sattelauflieger-Achse
- 22: Sensor
- 24: Sensor
- 26: Rechengerät
- 28: Verfahrensschritt
- 30: Verfahrensschritt
- 32: Verfahrensschritt
- 34: Verfahrensschritt

## Patentansprüche

1. Verfahren zum Bestimmen einer Achslast eines Sattelaufliegers (12), umfassend:
Bestimmen (28) einer Masse des Sattelaufliegers (12) und eines Sattelschleppers (10), der den Sattelauflieger (12) zieht, auf Basis von während der Fahrt gemessenen Fahrdynamikparametern;
Messen (30) einer Belastung (FRA) einer Hinterachse (18) des Sattelschleppers (10);
Berechnen (32) einer Belastung (FKP) eines Königzapfens (14) des Sattelschleppers (10) auf Basis der gemessenen Belastung (FRA);
Berechnen (34) der Achslast (20) des Sattelaufliegers (12) auf Basis der bestimmten Masse, einer Masse des Sattelschleppers (10) und der Belastung (FKP) des Königzapfens (14).

2. Verfahren nach Anspruch 1, wobei das Bestimmen der Masse des Sattelaufliegers (12) und des Sattelschleppers (10), der den Sattelauflieger (12) zieht, auf Basis von während der Fahrt gemessenen Fahrdynamikparametern umfasst:
Berechnen der Masse des Sattelaufliegers (12) und des Sattelschleppers (10), der den Sattelauflieger (12) zieht, auf Basis einer Geschwindigkeit und einer Beschleunigung des Sattelschleppers (10) und des Sattelaufliegers (12).

3. Verfahren nach Anspruch 1 oder 2, wobei das Messen der Belastung (FRA) der Hinterachse (18) des Sattelschleppers (10) umfasst:
Messen der Belastung (FRA) der Hinterachse (18) des Sattelschleppers (10) basierend auf einem Luftdruck eines Luftfederungssystems des Sattelschleppers (10).

4. Verfahren nach einem der Ansprüche 1 bis 3, wobei das Berechnen der Belastung (FKP) des Königzapfens (14) des Sattelschleppers (10) ferner auf einer Länge (a) eines Hebelarms von einer Vorderachse (16) zum Königszapfen (14) und einer Länge (b) eines Hebelarms von der Hinterachse (18) zum Königszapfen (14) basiert.

5. Verfahren nach einem der Ansprüche 1 bis 4, wobei das Berechnen der Achslast des Sattelaufliegers (12) auf Basis der bestimmten Masse, der Masse des Sattelschleppers (10) und der Belastung (FKP) des Königzapfens (14) auf einem Abziehen der Masse des Sattelschleppers (10) und der Belastung (FKP) des Königzapfens (14) von der bestimmten Masse und einem Teilen des Ergebnisses durch die Anzahl an Achsen basiert.

6. Verfahren nach einem der Ansprüche 1 bis 5, ferner umfassend ein Bereitstellen der Achslast an ein Luftfederungssystem des Sattelaufliegers (12).

7. Verfahren nach einem der Ansprüche 1 bis 6, ferner umfassend:
Erzeugen eines Alarms, wenn die Achslast über einer oberen Grenze liegt.

8. Verfahren nach einem der Ansprüche 1 bis 7, ferner umfassend:
Übertragen der Achslast per Funk zu einem Empfänger.

9. Verfahren nach einem der Ansprüche 1 bis 8, ferner umfassend ein Bereitstellen der Achslast an zumindest einen von:
einer Wiegestation; und
einem Computersystem einer Behörde.

10. Ein Achslast-Überwachungs-System, umfassend:
eine Vielzahl an Sensoren (26), eingerichtet zum Messen von Fahrdynamikparametern beim Fahren und einer Belastung einer Hinterachse (18) eines Sattelschleppers (10); und
ein Rechengerät (22), eingerichtet zum:
Bestimmen einer Masse des Sattelschleppers (10), der den Sattelauflieger (12) zieht, und des Sattelaufliegers (12) auf Basis der gemessenen Fahrdynamikparameter;
Berechnen einer Belastung (FKP) eines Königzapfens (14) des Sattelschleppers (10) auf Basis der gemessenen Belastung; und
Berechnen der Achslast (20) des Sattelaufliegers (12) auf Basis der bestimmten Masse, einer Masse des Sattelschleppers (10) und der Belastung (FKP) des Königzapfens (14).

11. System nach Anspruch 10, wobei das Rechengerät (22) eingerichtet ist, die Masse des Sattelaufliegers (12) und des Sattelschleppers (10), der den Sattelauflieger (12) zieht, auf Basis einer Geschwindigkeit und einer Beschleunigung des Sattelschleppers (10) und des Sattelaufliegers (12) zu berechnen.

12. System nach Anspruch 10 oder 11, wobei das Rechengerät (22) eingerichtet ist, die Belastung (FRA) der Hinterachse (18) des Sattelschleppers (10) basierend auf einem Luftdruck eines Luftfederungssystems des Sattelschleppers (10) zu messen.

13. System nach einem der Ansprüche 10 bis 12, wobei das Rechengerät (22) eingerichtet ist, die Belastung (FKP) des Königzapfens (14) des Sattelschleppers (10) basierend auf einer Länge (a) eines Hebelarms von einer Vorderachse (16) zum Königszapfen (14) und einer Länge (b) eines Hebelarms von der Hinterachse (18) zum Königszapfen (14) zu bestimmen.

14. System nach einem der Ansprüche 10 bis 13, wobei das Rechengerät (22) eingerichtet ist, die Masse des Sattelschleppers (10) und die Belastung (FKP) des Königzapfens (14) von der bestimmten Masse abzuziehen und das Ergebnis durch die Anzahl an Achsen (20) zu teilen.

15. System nach einem der Ansprüche 10 bis 14, wobei der Rechner (22) eingerichtet ist, die Achslast einem Luftfederungssystem des Sattelaufliegers (12) bereitzustellen.
